# EUROPÄISCHE PATENTANMELDUNG

(11) **EP 4 099 477 A1**
(43) Veröffentlichungstag der Anmeldung: **07.12.2022**
(21) Anmeldenummer: 22175407.0
(22) Anmeldetag: 25.05.2022
(51) Int. Cl.: H01M 10/613, H01M 10/625, H01M 10/6555, H01M 10/6556, H01M 50/209, H01M 50/249, H01M 50/289, H01M 10/04

(54) **ENERGIESPEICHERVORRICHTUNG UMFASSEND KÜHLVORRICHTUNG UND SPANNVORRICHTUNG**

(30) Priorität: 02.06.2021 DE 102021114360
(71) Anmelder: MAN Truck & Bus SE, 80995 München (DE)
(72) Erfinder: Burkhardt, Wolfgang, 80995 München (DE)
(74) Vertreter: v. Bezold & Partner Patentanwälte - PartG mbB

(57) **Zusammenfassung**

Die Erfindung betrifft eine Energiespeichervorrichtung (1, 1', 1") zur Speicherung elektrischer Energie, vorzugsweise für ein zumindest teilweise elektrisch angetriebenes Fahrzeug. Die Erfindung betrifft ferner ein Fahrzeug, vorzugsweise Nutzfahrzeug, umfassend eine Energiespeichervorrichtung (1; 1'; 1").

Die Energiespeichervorrichtung (1; 1'; 1") umfasst einen Batteriezellenstapel (2) aus einer Mehrzahl von stapelartig nebeneinander angeordneten Speicherzellen (3).

Die Energiespeichervorrichtung (1; 1'; 1") umfasst ferner eine Kühlvorrichtung (4) zur Kühlung der Speicherzellen (3), aufweisend mindestens eine mit einem Kühlmittel, vorzugsweise in Stapelrichtung (S), durchströmbare Kühlmittelleitung (5), die sich entlang einer Außenwand des Batteriezellenstapels (2) erstreckt, und mindestens ein wärmeleitfähiges Element (6; 16), das in mindestens einem der zwischen zwei benachbarten Speicherzellen (3) ausgebildeten Zwischenbereiche angeordnet ist, das sich aus dem Zwischenbereich heraus bis zu der Kühlmittelleitung (5) erstreckt und an die Kühlmittelleitung (5) thermisch kontaktiert ist.

Die Energiespeichervorrichtung (1; 1'; 1") umfasst ferner eine Spannvorrichtung (7) zum Verspannen der Speicherzellen (3), aufweisend mindestens ein sich entlang der Außenwand des Batteriezellenstapels (2) erstreckendes Spannelement (8), wobei ein Abschnitt der Kühlmittelleitung (5) das Spannelement (8) ausbildet.

## Beschreibung

Die Erfindung betrifft eine Energiespeichervorrichtung zur Speicherung elektrischer Energie, vorzugsweise für ein zumindest teilweise elektrisch angetriebenes Fahrzeug. Die Erfindung betrifft ferner ein Fahrzeug, vorzugsweise Nutzfahrzeug, umfassend eine Energiespeichervorrichtung.

Aus der Praxis bekannte Fahrzeugbatterien, wie sie z. B. als Energiespeicher bzw. als Traktionsbatterie in Hybridfahrzeugen oder Elektrofahrzeugen zum Einsatz kommen, verfügen typischerweise über ein oder mehrere Batteriepacks, in dem mehrere stapelartig angeordnete Batterie-Speicherzellen angeordnet sind. Die so in Sandwich-Form aneinander angeordneten Batterie-Speicherzellen sind üblicherweise in einem Halterahmen zur Positionierung und zur Verspannung gefasst, was zusätzlichen Bauraum beansprucht.

Um einen ordnungsgemäßen Betrieb sicherzustellen und eine Beschädigung einer solchen Fahrzeugbatterie zu vermeiden sowie um eine möglichst lange Lebensdauer zu erreichen, muss diese zudem in einem definierten Temperaturbereich betrieben werden. Hier ist es aus dem Stand der Technik beispielsweise bekannt, unterhalb der Batteriezellen eine Kühlplatte, mit einer darauf aufgebrachten Wärmeleitpaste, anzuordnen, die von einem Kühlfluid durchströmt wird, um die Batteriezellen zu kühlen. In diesen bekannten Lösungen wird typischerweise die flächenmäßig wesentlich kleinere, der Kühlplatte zugewandte Zellunterseite der Speicherzellen stärker gekühlt, als die flächenmäßig wesentlich größeren Seitenflächen der Speicherzellen. Es ergibt sich nachteilhaft eine inhomogene Temperaturverteilung innerhalb der Speicherzellen und innerhalb der Batterie-Zellenmodule.

Die Aufgabe der vorliegenden Erfindung ist es, eine Technik zur Temperierung, insbesondere zur Kühlung, von derartigen Energiespeichervorrichtungen bereitzustellen, mit der Nachteile bekannter Ansätze zur Kühlung und Halterung von Speicherzellen vermieden werden können.

Diese Aufgaben werden durch eine Energiespeichervorrichtung mit den Merkmalen des unabhängigen Anspruchs gelöst. Vorteilhafte Weiterbildungen sind in den abhängigen Ansprüchen und der Beschreibung angegeben.

Gemäß einem ersten allgemeinen Gesichtspunkt der Erfindung wird eine Energiespeichervorrichtung zur Speicherung elektrischer Energie bereitgestellt. Vorzugsweise handelt es sich um eine Energiespeichervorrichtung für ein zumindest teilweise elektrisch angetriebenes Fahrzeug. In anderen Worten kann die Energiespeichervorrichtung in an sich bekannter Weise dazu ausgebildet sein, elektrische Energie zu speichern, die in entsprechenden Antriebskomponenten des Fahrzeugs, z. B. in einer E-Maschine, in Antriebsenergie gewandelt werden kann. Anders ausgedrückt kann die Energiespeichervorrichtung zur temporären Aufnahme von Traktionsenergie ausgebildet sein.

Die Energiespeichervorrichtung umfasst einen Batteriezellenstapel aus einer Mehrzahl von stapelartig nebeneinander angeordneten Speicherzellen. Anders ausgedrückt können die Speicherzellen sandwichartig oder in Sandwich-Form aneinander angeordnet sein.

Ferner umfasst die Energiespeichervorrichtung eine Kühlvorrichtung zur Kühlung der Speicherzellen. Die Kühlvorrichtung weist mindestens eine mit einem Kühlmittel, vorzugsweise in Stapelrichtung, durchströmbare Kühlmittelleitung auf, die sich entlang einer Außenwand des Batteriezellenstapels erstreckt. Die Kühlvorrichtung weist ferner mindestens ein wärmeleitfähiges Element auf, das in einem der zwischen zwei benachbarten Speicherzellen ausgebildeten Zwischenbereiche angeordnet ist. Das wärmeleitfähige Element erstreckt sich jeweils aus dem Zwischenbereich heraus bis zu der Kühlmittelleitung und ist an die Kühlmittelleitung thermisch kontaktiert. Optional kann in jedem der zwischen zwei benachbarten Speicherzellen ausgebildeten Zwischenbereiche oder einem Teil dieser Zwischenbereiche ein solches wärmeleitfähiges Element angeordnet sein.

Die Energiespeichervorrichtung umfasst ferner eine Spannvorrichtung zum mechanischen Verspannen der Speicherzellen. Die Spannvorrichtung weist mindestens ein sich entlang einer der Außenwand des Batteriezellenstapels erstreckendes Spannelement auf. Hierbei bildet ein Abschnitt der Kühlmittelleitung das Spannelement aus.

Die vorgeschlagene Energiespeichervorrichtung birgt gegenüber den bekannten Lösungen mehrere Vorteile. In besonders vorteilhafter Weise dient die Kühlmittelleitung in einer Art Doppelfunktion sowohl der Temperierung der Speicherzellen mittels des Kühlmittels als auch zum Verspannen des Batteriezellenstapels. Ein zusätzlicher Halterahmen zur Halterung des Batteriezellenstapels kann in vorteilhafter Weise entfallen, wodurch eine kompaktere Konstruktion ermöglicht wird. Das zwischen zwei benachbarten Speicherzellen angeordnete wärmeleitfähige Element, dass an die Kühlmittelleitung thermisch kontaktiert ist, ermöglicht ferner eine homogenere Temperierung dieser benachbarten Speicherzellen im Vergleich zu einer lediglich an einer Unterseite der Speicherzellen angeordneten Kühlplatte. Eine solche Kühlplatte kann optional entfallen, so dass in diesem Fall eine Bauhöhe reduziert werden kann. Dies reduziert den technischen Aufwand und birgt Kosten-, Gewicht- und Packaging-Vorteile.

Gemäß einer besonders vorteilhaften Ausführungsform kann die Spannvorrichtung zumindest eine mit einem Außengewinde des Spannelements kämmende Gewindemutter aufweisen, mittels derer eine Spannkraft in Stapelrichtung erzeugbar ist. Es ist denkbar, dass die Spannkraft über ein Einschrauben der Gewindemutter in Stapelrichtung und ein dadurch bedingtes Klemmen oder Pressen des Batteriezellenstapels erzeugbar ist. Die zumindest eine Gewindemutter kann z. B. mittelbar oder unmittelbar an dem Batteriezellenstapel anliegen. Die Spannkraft kann zweckmäßig groß genug gewählt sein, ein Anschwellen zu verhindern und gleichzeitig zweckmäßig klein genug gewählt sein, eine mechanische Beschädigung der Speicherzellen zu verhindern. Die Gewindemutter kann z. B. eine Sechskantmutter oder Rändelmutter sein. Die Spannvorrichtung ist somit mit besonders geringem technischen Aufwand umsetzbar.

Gemäß einer Weiterbildung der letztgenannten Ausführungsform kann die Gewindemutter an einer, in Stapelrichtung gesehen, stirnseitigen Außenfläche des Batteriezellenstapels anliegen. In anderen Worten kann die Gewindemutter an der Außenfläche des Batteriezellenstapels anliegen, deren Normalenvektor in Stapelrichtung verläuft.

Alternativ dazu kann die Spannvorrichtung zwei Gewindemuttern und zwei an in Stapelrichtung gegenüberliegenden Stirnseiten des Batteriezellenstapels angeordnete Verstärkungsbleche aufweisen, die jeweils zwischen der Stirnseite und einer der Gewindemuttern angeordnet sind. Die Verstärkungsbleche sind vorzugsweise aus einem metallischen Werkstoff gefertigt, bspw. aus Aluminium oder Stahl. Es ist jedoch jedes andere Material ausreichender Steifigkeit denkbar, wie bspw. kohlenstofffaserverstärkter Kunststoff oder sonstige Kunststoffe. Die mittels der Gewindemutter aufgebrachte Spannkraft kann somit flächig auf die stirnseitige Außenfläche des Batteriezellenstapels verteilt werden. Dadurch kann das Risiko einer Beschädigung der Speicherzellen des Batteriezellenstapels durch zu hohe Spannkräfte reduziert werden.

Bevorzugt weist die Spannvorrichtung zwei sich an gegenüberliegenden Seitenflächen des Batteriezellenstapels angeordnete Spannelemente auf. Vorzugsweise erstreckt sich die Spannvorrichtung von der ersten bis zur letzten Speicherzelle des Batteriezellenstapels. Beispielsweise kann das Spannelement ausgebildet sein, die Speicherzellen in Stapelrichtung zu positionieren und/oder zusammen zu pressen. Das Verspannen kann zweckmäßigerweise mechanisch erfolgen. Beispielsweise kann die Spannvorrichtung ausgebildet sein, sich mittelbar oder unmittelbar an der ersten Speicherzelle und letzten Speicherzelle des Batteriezellenstapels abzustützen. Die Speicherzellen können durch das Verspannen kraftschlüssig oder formschlüssig gegeneinander fixiert sein. Ferner kann das Spannelement ausgebildet sein, ein, vorzugsweise alterungs- bzw. vom Ladezustand bedingtes, Anschwellen zu verhindern oder zu mindern.

Gemäß einem weiteren Aspekt kann ein aus dem Zwischenbereich herausragender Abschnitt des wärmeleitfähigen Elements mindestens eine Ausnehmung aufweisen, durch die sich der das Spannelement ausbildende Abschnitt der Kühlmittelleitung erstreckt. In anderen Worten kann der das Spannelement ausbildende Abschnitt der Kühlmittelleitung durch die Ausnehmung des wärmeleitfähigen Elements geführt sein. Es ist denkbar, dass der das Spannelement ausbildende Abschnitt der Kühlmittelleitung und das wärmeleitfähige Element formschlüssig verbunden sind.

Vorzugsweise sind mehrere derartige wärmeleitfähige Elemente vorgesehen, die baugleich ausgeführt sind und jeweils in unterschiedlichen Zwischenbereichen angeordnet sind, so dass deren Ausnehmungen fluchtend zueinander angeordnet sind.

Vorzugsweise ragt der Abschnitt des wärmeleitfähigen Elements seitlich, orthogonal zur Stapelrichtung, aus dem Batteriezellenstapel heraus. Die Ausnehmung ist vorzugsweise eine Bohrung, kann jedoch geometrisch beliebig ausgestaltet sein, bspw. als rechteckförmige Ausfräsung. Die Ausnehmung erleichtert die Positionierung, Halterung und thermische Kontaktierung der Kühlmittelmitteleitung.

Gemäß einer weiteren Ausführungsform kann das wärmeleitfähige Element zur thermischen Kontaktierung an die Kühlmittelleitung an den das Spannelement ausbildenden Abschnitt der Kühlmittelleitung gelötet sein. Im Falle mehrerer wärmeleitfähiger Elemente sind diese vorzugsweise in einem Abstand, der der Stärke einer Speicherzelle entspricht, an den das Spannelement ausbildenden Abschnitt der Kühlmittelleitung angelötet. Das Löten kann bspw. analog zum Löten von Kühllamellen eines Wasser-Luft-Kühlers erfolgen. Die Lötnaht kann z. B. umlaufend oder als Lötpunkt ausgebildet sein. In dieser Ausführungsform ist die Kühlvorrichtung mit relativ geringem technischen Aufwand herstellbar.

Alternativ oder ergänzend kann das wärmeleitfähige Element zur thermischen Kontaktierung an die Kühlmittelleitung an den das Spannelement ausbildenden Abschnitt der Kühlmittelleitung geklemmt sein. Vorzugsweise ist das wärmeleitfähige Element zur thermischen Kontaktierung an die Kühlmittelleitung zwischen zwei an gegenüberliegenden Außenflächen des Batteriezellenstapels angeordneten Abschnitten zweier Kühlmittelleitungen eingeklemmt.

Alternativ oder ergänzend kann das wärmeleitfähige Element zur thermischen Kontaktierung an die Kühlmittelleitung um den als Spannelement ausgebildeten Abschnitt der Kühlmittelleitung gebogen sein. Vorzugsweise ist das wärmeleitfähige Element dergestalt um den als Spannelement ausgebildeten Abschnitt der Kühlmittelleitung gebogen, dass das wärmeleitfähige Element abschnittsweise flächig an dem das Spannelement ausbildenden Abschnitt der Kühlmittelleitung anliegt. Es ist denkbar, dass das umgebogene wärmeleitfähige Element den als Spannelement ausgebildeten Abschnitt der Kühlmittelleitung formkorrespondierend oder mantelartig umfasst oder umhüllt. Die thermische Kontaktierung zwischen wärmeleitfähigem Element und Spannelement wird damit mit geringem technischen Aufwand umgesetzt.

Gemäß einem weiteren Aspekt kann das wärmeleitfähige Element aus einem metallischem Material gefertigt sein. Das wärmeleitfähige Element kann ein Wärmeleitblech sein, beispielsweise ein Aluminium-Blech. Denkbar sind aber auch weitere metallische wärmeleitende Werkstoffe, bspw. Kupfer oder Stahl. Die besonders hohe Wärmeleitfähigkeit wirkt sich leistungssteigernd auf die Kühlvorrichtung und damit auf die Leistungsfähigkeit der Energiespeichervorrichtung aus.

Gemäß einer Weiterbildung des letztgenannten Aspekts kann das Wärmeleitblech plan und in einem im Zwischenbereich angeordneten Abschnitt klammerförmig und/oder C-förmig und/oder hufeisenförmig ausgebildet sein. Es ist denkbar, dass das Wärmeleitblech nur in einem Randbereich der sich zugewandten Seitenflächen von benachbarten Speicherzellen flächig anliegt. Dies reduziert das Gewicht der Kühlvorrichtung.

Bevorzugt liegt das wärmeleitfähige Element jeweils an den sich zugewandten Seitenflächen von benachbarten Speicherzellen flächig an. Zwischen dem wärmeleitfähigen Element und der Speicherzelle kann eine elektrisch isolierende Wärmeleitpaste aufgebracht sein. Vorzugsweise liegt das mindestens eine wärmeleitfähige Element auch an der Kühlmittelleitung flächig an. Das wärmeleitfähige Element kann beispielsweise dazu ausgebildet sein, in den Speicherzellen stehende Verlustwärme aufzunehmen und an die Kühlmittelleitung abzuleiten. Die Kühlmittelleitung kann ausgebildet sein, die aufgenommene Wärme an das im Innenvolumen der Kühlmittelleitung strömende Kühlmittel abzugeben.

In einer weiteren Ausführungsform kann das wärmeleitfähige Element zumindest abschnittsweise wellenförmig geformt ausgebildet sein. Vorzugsweise ist das wärmeleitende Element in einem im Zwischenbereich liegenden Abschnitt des wärmeleitfähigen Elements wellenförmig ausgebildet. In anderen Worten kann das wärmeleitfähige Element einen welligen oder geriffelten Querschnitt aufweisen. Durch die Wellen- oder Riffelform wird die Oberfläche des wärmeleitfähigen Elements vergrößert, was sich vorteilhaft auf die übertragbare Kühl- oder Heizleistung auswirken kann. Ferner wird durch die wellenförmige Ausgestaltung des wärmeleitfähigen Elements sichergestellt, dass das Element definiert an beiden benachbarten Speicherzellen anliegt und thermisch an diese kontaktiert, da vorzugsweise die eine Speicherzelle mit ihrer dem wärmeleitfähigen Element zugewandten Seite dieses nur im Bereich der Wellentäler und die benachbarte Speicherzelle mit ihrer dem wärmeleitfähigen Element zugewandten Seite diese nur im Bereich der Wellenberge berührt.

In einer weiteren Ausführungsform kann auf zwei gegenüberliegenden Seiten des Batteriezellenstapels jeweils eine Kühlmittelleitung und ein Spannelement angeordnet sein, wobei ein Abschnitt der Kühlmittelleitungen das entsprechende Spannelement ausbildet. Vorzugsweise sind jeweils eine Kühlmittelleitung und ein Spannelement auf zwei gegenüberliegenden Seitenflächen des Batteriezellenstapels angeordnet. Dies birgt den Vorteil, dass der Batteriezellenstapel mittels der beiden Spannelemente symmetrisch verspannt werden kann. Ferner wird die erreichbare Kühlleistung weiter erhöht.

Gemäß einer Weiterbildung des letztgenannten Aspekts können in mindestens einem der zwischen zwei benachbarten Speicherzellen ausgebildeten Zwischenbereiche zwei wärmeleitfähige Elemente angeordnet sein. Vorzugsweise können die zwei wärmeleitfähigen Elemente in unterschiedlichen Hälften des Zwischenbereichs angeordnet sein. Das eine der zwei wärmeleitfähigen Elemente kann an der einen Kühlmittelleitung und das andere der zwei wärmeleitfähigen Elemente an der anderen Kühlmittelleitung thermisch kontaktiert sein.

Vorstehend wurde bereits festgestellt, dass die Kühlvorrichtung mehrere wärmeleitfähige Elemente aufweisen kann. Besonders bevorzugt sind zwischen allen Speicherzellen jeweils mindestens ein wärmeleitfähiges Element angeordnet. Beispielsweise können wärmeleitfähige Elemente und Speicherzellen alternierend aufeinander folgend stapelartig angeordnet sein. Damit ist in der Energiespeichervorrichtung eine besonders homogene Temperaturverteilung erreichbar.

Gemäß einem weiteren Aspekt kann sich die Spannvorrichtung in Stapelrichtung zumindest von der ersten Speicherzelle bis zur letzten Speicherzelle des Batteriezellenstapels erstrecken. Beispielsweise kann sich die Spannvorrichtung mittelbar oder unmittelbar auf der ersten Speicherzelle und letzten Speicherzelle abstützen.

In einer weiteren Ausführungsform kann der das Spannelement ausbildende Abschnitt der Kühlmittelleitung als Rohr ausgeführt sein. Das Rohr kann vorzugsweise an einem in Stapelrichtung überstehendenden Endbereich einen Anschlussflansch aufweisen. Der Anschlussflansch kann z. B. als Schraubfitting, Rohrmutter oder Rohrmuffe ausgebildet sein. Die Kühlvorrichtung ist damit mit geringem technischen Aufwand in ein bestehendes Kühlsystem des Fahrzeugs oder Nutzfahrzeugs integrierbar.

Gemäß einem weiteren Aspekt können die Speicherzellen des Batteriezellenstapels lediglich durch Verspannen mittels der Spannvorrichtung zueinander in Position gehalten sein. Vorzugsweise ist kein zusätzlicher Halterahmen zur Halterung der Speicherzellen vorgesehen. Dies reduziert den technischen Aufwand weiter und ermöglicht eine baulich kompaktere Konstruktion.

Der Abschnitt der Kühlmittelleitung, der das Spannelement ausbildet, bildet in seinem Innenvolumen einen Fluidkanal zur Führung von Kühlmittel aus und ist in der Außenwandung so stabil ausgeführt, dass auftretende Spannkräfte aufgenommen werden können. Hierbei ist eine Ausführungsvariante denkbar, wonach die Wandung des Fluidkanals direkt die Spannkräfte aufnimmt. Alternativ kann der Abschnitt der Kühlmittelleitung, der das Spannelement ausbildet, ein Innenrohr zur Führung von Kühlmittel aufweisen und ein das Innenrohr umgebenes Außenrohr, das zur Aufnahme der mechanischen Spannkräfte ausgelegt ist. Bei dieser Ausführungsvariante ist das Außenrohr bevorzugt an das Innenrohr thermisch kontaktiert, entweder unmittelbar oder mittelbar über ein wärmeleitfähiges Füllmaterial zwischen Außen- und Innenrohr.

Die Energiespeichervorrichtung kann weitere zur Speicherung elektrischer Energie notwendige und an sich bekannte Komponenten umfassen, wie beispielsweise Platinen, Schaltungen, Relais, etc. zur Ausbildung einer Zellmodul- und/oder Energiespeichersteuerung, Leitungen, Grund- oder Endplattenplatten, Busbars, Terminals, Deck- oder Seitenabdeckungen, Kunststoffplatten und/oder Leiterplatten etc.

Die Speicherzellen können parallel und/oder seriell miteinander verschaltet sein. Die Speicherzellen können z. B. als prismatische Zellen oder Lithium-Ionen-Akkumulatoren ausgebildet sein.

Unter dem Begriff der Kühlung ist vorzugsweise, aber nicht ausschließlich, die Abfuhr von Wärme der Speicherzellen zu verstehen. Es ist nämlich auch denkbar, dass die Erfindung - insbesondere bei niedrigen Temperaturen oder beim Kaltstart des Fahrzeugs - zur Erwärmung oder Vorwärmung der Speicherzellen dient, bspw. um die Speicherzellen auf Betriebstemperatur zu bringen oder zu halten. Die Kühlvorrichtung kann somit allgemein als Temperiervorrichtung der Speicherzellen dienen, d. h. z. B. dazu die Speicherzellen zu kühlen oder zu erwärmen, um sie auf einer optimalen Betriebstemperatur oder in einem optimalen Betriebstemperaturbereich zu halten.

Die Kühlmittelleitung kann dazu z. B. in ihrem Innenvolumen einen entsprechenden Fluidführungskanal aufweisen. Die Kühlmittelleitung kann z. B. ausgebildet sein, an einen Kühlkreislauf des Fahrzeugs bzw. des Nutzfahrzeugs angeschlossen zu werden. Die Kühlmittelleitung kann ausgebildet sein, von Wasser oder von einer anderen Kühlflüssigkeit durchströmt zu werden. Mit der Stapelrichtung kann z. B. diejenige Raumrichtung bezeichnet werden, entlang derer die Speicherzellen stapelartig nebeneinander angeordnet sind.

Die Kühlvorrichtung erstreckt sich entlang der Außenwand des Batteriezellenstapels. Vorzugsweise ist die Außenwand eine Seitenfläche des Batteriezellenstapels. Z. B. kann die Außenwand eine orthogonal zu einer Bodenfläche (untere Seitenfläche) angeordnete Seitenfläche des Batteriezellenstapels sein.

Die Erfindung betrifft ferner ein Fahrzeug, aufweisend eine Energiespeichervorrichtung wie in diesem Dokument beschrieben. Das Fahrzeug ist vorzugsweise zumindest teilweise elektrisch angetrieben. Vorzugsweise handelt es sich bei dem Fahrzeug um ein Kraftfahrzeug, beispielsweise um einen Personenkraftwagen (PKW) oder um ein Nutzfahrzeug. In letztgenanntem Fall kann es sich bei dem Fahrzeug mit anderen Worten um ein Kraftfahrzeug handeln, das durch seine Bauart und Einrichtung zur Beförderung von Personen, zum Transport von Gütern oder zum Ziehen von Anhängerfahrzeugen ausgelegt ist. Beispielsweise kann es sich bei dem Fahrzeug um einen Lastkraftwagen, einen Omnibus und/oder einen Sattelzug handeln, der zumindest teilweise elektrisch angetrieben ist. Es ist jedoch auch denkbar, dass das Fahrzeug ein Schienenfahrzeug oder Flugzeug ist.

Die zuvor beschriebenen bevorzugten Ausführungsformen und Merkmale der Erfindung sind beliebig miteinander kombinierbar. Zur Vermeidung von Wiederholungen sollen rein vorrichtungsgemäß offenbarte Merkmale auch als verfahrensgemäß offenbart gelten und beanspruchbar sein. Die vorgenannten Aspekte und erfindungsgemäßen Merkmale, insbesondere im Hinblick auf die Ausbildung der Kühlkörper und Kühlplatte und deren Anordnung zueinander gelten somit auch für das Verfahren.

Einzelheiten und Vorteile der Erfindung werden im Folgenden unter Bezug auf die beigefügte Zeichnungen beschrieben. Es zeigen:
- Figur 1: eine perspektivische Ansicht einer Energiespeichervorrichtung gemäß einer Ausführungsform der Erfindung;
- Figur 2a: eine Vorderansicht der Energiespeichervorrichtung aus Figur 1;
- Figur 2b: eine Seitenansicht der Energiespeichervorrichtung aus Figur 1;
- Figur 2c: eine Draufsicht der Energiespeichervorrichtung aus Figur 1;
- Figur 3a: eine perspektivische Ansicht eines wärmeleitenden Elements der Energiespeichervorrichtung aus Figur 1;
- Figur 3b: eine Vorderansicht (oben links), eine Seitenansicht (oben rechts) und eine Draufsicht (unten) des wärmeleitenden Elements der Energiespeichervorrichtung aus Figur 1;
- Figur 3c: einen vergrößerten Teilausschnitt des wärmeleitenden Elements der Energiespeichervorrichtung aus Figur 1 (Draufsicht);
- Figur 4: eine perspektivische Ansicht einer Kühlvorrichtung der Energiespeichervorrichtung aus Figur 1;
- Figur 5: eine Seitenansicht (oben links), eine Vorderansicht (oben rechts), eine Draufsicht (unten links) und eine perspektivische Ansicht einer Energiespeichervorrichtung gemäß einer weiteren Ausführungsform der Erfindung;
- Figur 6: eine perspektivische Teilansicht einer Energiespeichervorrichtung gemäß einer weiteren Ausführungsform der Erfindung.

Gleiche oder funktional äquivalente Elemente sind in allen Figuren mit denselben Bezugszeichen bezeichnet und sind zum Teil nicht gesondert beschrieben.

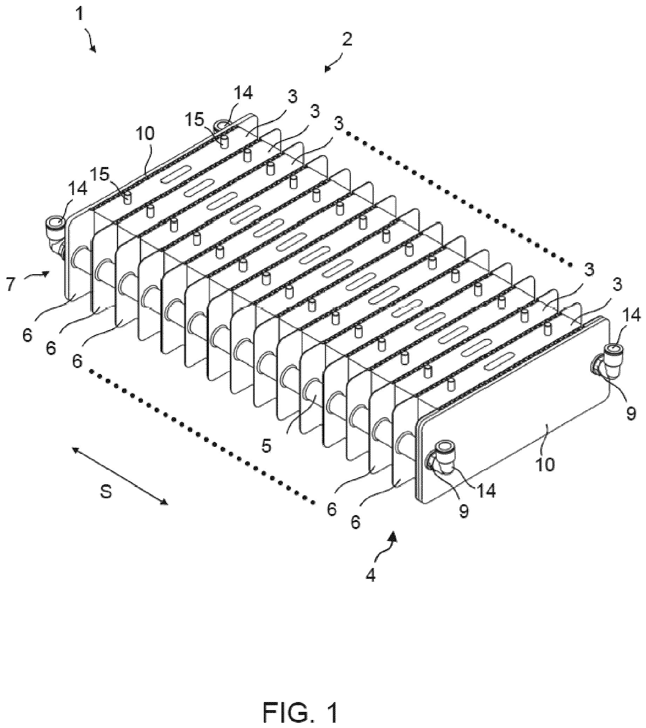

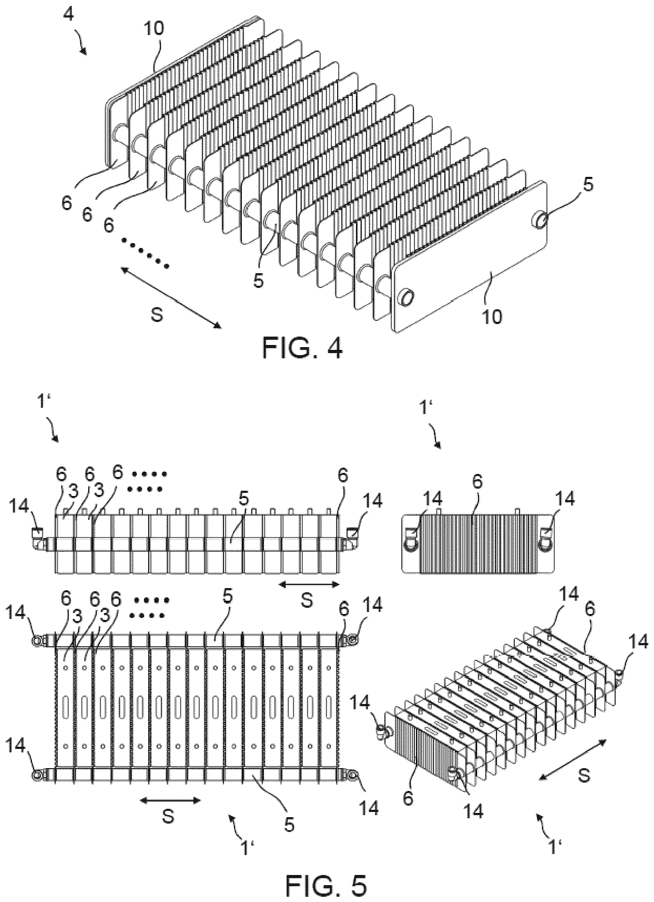

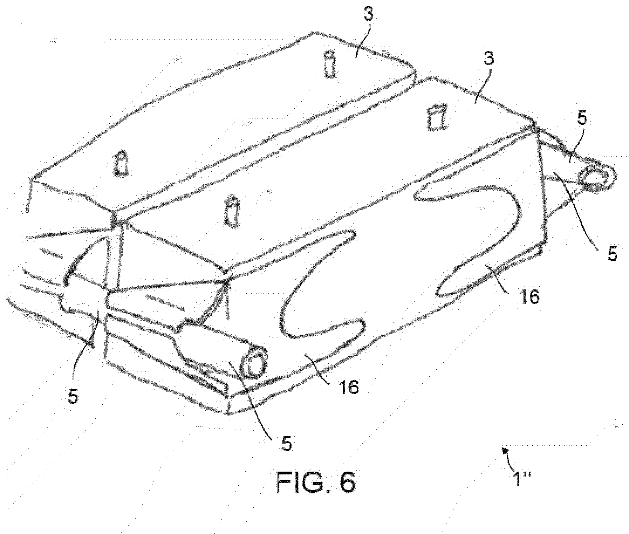

Die Figuren 1, 2a, 2b, 2c, 3a, 3b, 3c und 4 zeigen eine erste, die Figur 5 eine zweite und die Figur 6 eine dritte Ausführungsform der vorgeschlagenen Energiespeichervorrichtung 1, wobei die Figuren zum Teil lediglich der besseren Veranschaulichung des jeweils charakteristischen Teilaspekts der jeweiligen Ausführungsform dienen. Auf die Darstellung von für diese charakteristischen Teilaspekte nicht wesentlicher Komponenten wurde teilweise zur besseren Sichtbarkeit dieses charakteristischen Aspekts verzichtet.

Figur 1 zeigt eine perspektivische Ansicht einer Energiespeichervorrichtung 1 gemäß einer Ausführungsform der Erfindung. Die Energiespeichervorrichtung 1 ist in an sich bekannter Weise zur Speicherung elektrischer Energie ausgebildet, vorzugsweise für ein zumindest teilweise elektrisch angetriebenes Nutzfahrzeug (nicht dargestellt).

Die Energiespeichervorrichtung 1 umfasst einen Batteriezellenstapel 2, der aus einer Mehrzahl an stapelartig nebeneinander angeordneten Speicherzellen 3 gebildet wird. Der Batteriezellenstapel 2 weist eine Oberseite auf, an der die elektrischen Anschlüsse 15 der Speicherzellen 3 angeordnet sind. Der Batteriezellenstapel 2 weist ferner eine der Oberseite gegenüberliegende Unterseite (in dieser perspektivischen Ansicht verdeckt), zwei orthogonal zur Ober- und Unterseite angeordnete, einander gegenüberliegende, in Stapelrichtung S orientierte Außen- bzw. Seitenwände auf. Der Batteriezellenstapel 2 weist ferner zwei orthogonal zur Stapelrichtung S orientierte, einander gegenüberliegende Stirnflächen auf.

Zugunsten der Leistungsfähigkeit und Lebensdauer ist die Energiespeichervorrichtung 1 bei einer bestimmten Betriebstemperatur zu betreiben. Dazu umfasst die Energiespeichervorrichtung 1 eine Kühlvorrichtung 4, mittels der die Energiespeichervorrichtung 1 temperiert werden kann. Im Folgenden wird vorwiegend auf die Möglichkeit einer Kühlung der Energiespeichervorrichtung 1 eingegangen, eine Heizung der Energiespeichervorrichtung 1 ist mittels der vorgeschlagenen Lösung jedoch ebenso umsetzbar.

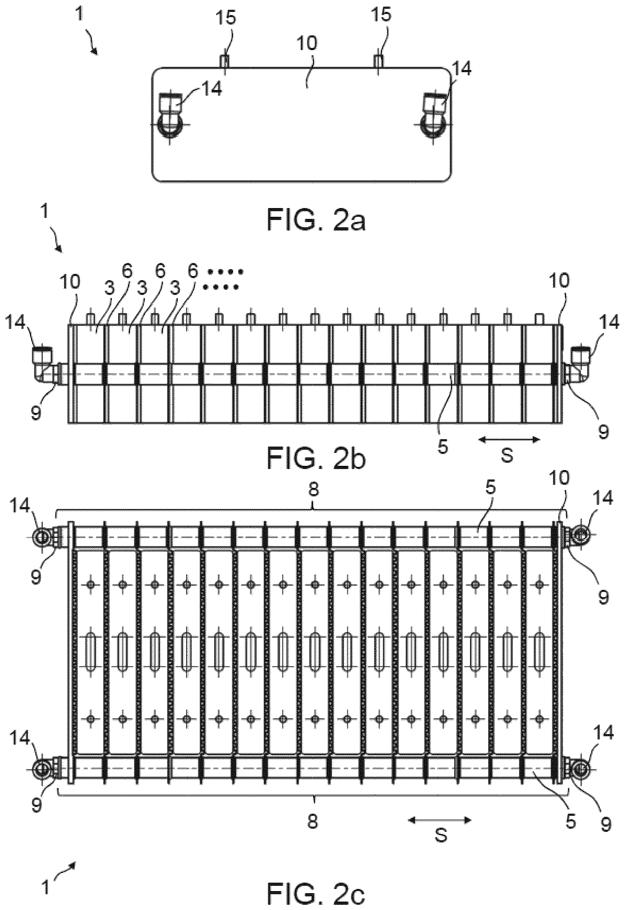

In dieser Ausführungsform erstrecken sich entlang beider Außenwände des Batteriezellenstapels 2 in Stapelrichtung S, zwei Kühlmittelleitungen 5 einer Kühlvorrichtung 4 (siehe auch Fig. 2c). Die Kühlmittelleitungen 5 sind mittels der Anschlussflansche 14 in Stapelrichtung S überstehender Endbereiche an den Kühlkreislauf des Nutzfahrzeugs angeschlossen. Die Kühlmittelleitungen 5 sind als hohle Rohre ausgebildet, deren Innenvolumen einen Fluidführungskanal ausbilden. Die Rohre werden in Stapelrichtung S mit Kühlflüssigkeit des Kühlkreislaufs des Nutzfahrzeugs durchströmt.

Jeweils zwei benachbarte Speicherzellen 3 bilden einen Zwischenbereich aus. In jeweils einem Zwischenbereich, also zwischen allen Speicherzellen 3, ist jeweils ein wärmeleitfähiges Element 6 angeordnet. Das wärmeleitfähige Element 6 liegt jeweils an den sich zugewandten Seitenflächen von benachbarten Speicherzellen 6 an, sodass ein Wärmeaustausch zwischen Speicherzellen 3 und wärmeleitfähigen Elementen 6 stattfinden kann. Die in den Speicherzellen 3 im Betrieb entstehende Verlustwärme wird an das wärmeleitfähige Element 6 übertragen. In dieser Ausführungsform findet die Wärmeleitung hauptsächlich durch die mechanische Kontaktierung zwischen Speicherzellen 3 und wärmeleitfähigen Elementen 6 statt. Zur Verbesserung der thermischen Kontaktierung kann zwischen den Speicherzellen 3 und dem wärmeleitfähigen Element 6 eine Wärmeleitpaste aufgebracht sein. Es ist jedoch auch denkbar, dass die Wärmeleitung, zumindest teilweise, mittels Konvektion oder Wärmestrahlung umgesetzt wird.

Die wärmeleitenden Elemente 6 erstrecken sich beidseitig orthogonal zur Stapelrichtung S aus dem Zwischenbereich heraus bis zu den beiden Kühlmittelleitungen 5. An den Kühlmittelleitungen 5 sind die wärmeleitenden Elemente 6 thermisch kontaktiert.

Die durch die wärmeleitenden Elemente 6 von den Speicherzellen 3 aufgenommene Verlustwärme wird über die thermische Kontaktierung an die Kühlmittelleitungen 5 weitergeleitet und mittels des in den Kühlmittelleitungen 5 strömenden Kühlmittels abtransportiert. Die voranstehend dargelegten Zusammenhänge zum Wärmetransport der Verlustwärme von den Speicherzellen 3 zu den Kühlmittelleitungen 5 kann analog offensichtlich auch als Transport von Kühlleistung von den Kühlmittelleitungen 5 zu den Speicherzellen gesehen werden.

Um ein betriebs- oder alterungsbedingtes Anschwellen der Speicherzellen 3 zu verhindern oder zu mindern und um die Speicherzellen 3 zu positionieren und festzulegen, umfasst die Energiespeichervorrichtung 1 eine Spannvorrichtung 7 zum Verspannen der Speicherzellen 3, die nachfolgend mit Bezug auf die Figuren 2a, 2b und 2c erläutert wird. In der gezeigten Ausführungsform weist die Spannvorrichtung 7 auf zwei gegenüberliegenden Seiten des Batteriezellenstapels 2 jeweils ein Spannelement 8 auf. Das entsprechende Spannelement 8 wird durch einen Abschnitt der Kühlmittelleitungen 5 ausgebildet. Die Spannvorrichtung 7 erstreckt sich vorliegend, in Stapelrichtung S gesehen, von der ersten Speicherzelle 3 bis zur letzten Speicherzelle 3 des Batteriezellenstapels 2.

Die Kühlmittelleitungen 5 weisen zur Ausbildung der Spannelemente 8 auf deren Außenumfang Außengewinde auf (nicht dargestellt). Mittels mit diesen Außengewinden kämmenden Gewindemuttern 9 ist eine Spannkraft in Stapelrichtung S erzeugbar. Die Gewindemuttern 9 liegen jeweils an zwei Verstärkungsblechen 10 an. Die Verstärkungsbleche 10 sind an in Stapelrichtung S gegenüberliegenden Stirnseiten des Batteriezellenstapels 2 und jeweils zwischen der Stirnseite und einer den Gewindemuttern 9 angeordnet. Ein Einschrauben der Gewindemuttern 9 führt zu einer axialen Verlagerung der Verstärkungsbleche 10 und damit zu einer Verspannung des Batteriezellenstapels 2. Die Speicherzellen 3 des Batteriezellenstapels 2 werden lediglich durch Verspannen mittels der Spannvorrichtung 7 zueinander in Position gehalten. Ein zusätzlicher Halterahmen zur Halterung der Speicherzellen 3 ist nicht vorgesehen.

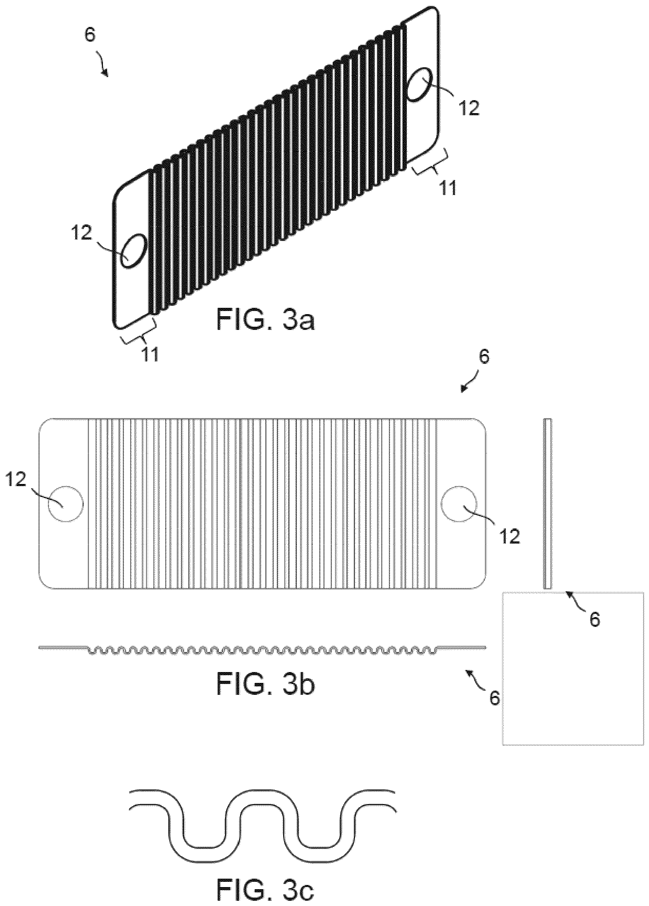

Figur 3a zeigt eine perspektivische Ansicht eines wärmeleitenden Elements 6 der Energiespeichervorrichtung 1 aus Figur 1. Das wärmeleitfähige Element 6 ist in der gezeigten Ausführungsform ein Aluminium-Wärmeleitblech. Ein aus dem Zwischenbereich herausragender Abschnitt 11 des wärmeleitfähigen Elements 6 weist beidseitig jeweils eine als Bohrung ausgebildete Ausnehmung 12 auf. Der Innendurchmesser der Ausnehmungen 12 entspricht im Wesentlichen dem Außendurchmesser der Kühlmittelleitungen 5. Der das Spannelement 8 ausbildende Abschnitt der Kühlmittelleitung 5 erstreckt sich durch die Ausnehmung 12 des wärmeleitenden Elements 6 (siehe Fig. 1). Zur thermischen Kontaktierung an die Kühlmittelleitung 5 ist das wärmeleitfähige Element 6 an den das Spannelement 8 ausbildenden Abschnitt der Kühlmittelleitung 5 gelötet. Die Lötnaht ist als umlaufende Lötnaht ausgeführt.

Figur 3b zeigt eine Vorderansicht (oben links), eine Seitenansicht (oben rechts) und eine Draufsicht (unten) des wärmeleitenden Elements 6 der Energiespeichervorrichtung 1 aus Figur 1.

Wie insbesondere aus der Draufsicht in Figur 3b (unten) ersichtlich ist, ist das wärmeleitende Element 6 in dem im Zwischenbereich liegenden Abschnitt wellenförmig ausgebildet. Die Wellenform ist hier lediglich beispielhaft orthogonal zur Stapelrichtung orientiert. Das wärmeleitfähige Element 6 liegt dadurch nur im Bereich der Wellentäler und/oder Wellenberge an den Speicherzellen 3 an (siehe z. B. auch Figur 2c). Durch die Wellenform wird die Oberfläche des wärmeleitfähigen Elements 6 vergrößert und damit die übertragbare Kühl- oder Heizleistung erhöht. Ferner wird durch die in Figur 3c vergrößert dargestellte wellige bzw. geriffelte Ausgestaltung des wärmeleitfähigen Elements 6 sichergestellt, dass das wärmeleitende Element 6 definiert nur an der Speicherzellen 3 anliegt und an diesen thermisch kontaktiert.

Figur 4 zeigt eine perspektivische Ansicht einer Kühlvorrichtung 4 der Energiespeichervorrichtung 1 aus Figur 1. Auf die Darstellung der Speicherzellen 3 wurde zugunsten der Übersichtlichkeit verzichtet. Die wärmeleitenden Elemente 6 sind in regelmäßigen Abständen auf die beiden gegenüberliegenden Kühlmittelleitungen 5 gelötet. Die Abstände zweier benachbarter wärmeleitfähiger Elemente 6 entsprechen im Wesentlichen der Stärke einer Speicherzelle 6. So ist denkbar, dass die Kühlvorrichtung 4 durch ein Durchführen oder Durchfädeln der Kühlmittelleitungen 5 durch die Ausnehmungen 12 der wärmeleitfähigen Elemente 6 und durch anschließendes Verlöten einzeln positioniert bzw. vormontiert werden, um die Kühlvorrichtung 4 anschließend als Ganzes auf die Speicherzellen 3 des Batteriezellenstapels zu setzen und mittels der Spannvorrichtung 7 zu verspannen.

Figur 5 zeigt eine Seitenansicht (oben links), eine Vorderansicht (oben rechts), eine Draufsicht (unten links) und eine perspektivische Ansicht einer Energiespeichervorrichtung 1' gemäß einer weiteren Ausführungsform der Erfindung.

Die gezeigte Ausführungsform weist alle Merkmale der Ausführungsform der Figur 1 auf. Im Unterschied zur Ausführungsform der Figur 1 umfasst die Spannvorrichtung 7 jedoch keine Verstärkungsbleche 10. Die Gewindemuttern 9 liegen an einer, in Stapelrichtung S gesehen, stirnseitigen Außenfläche des Batteriezellenstapels 2 an. In der hier gezeigten Ausführungsform wird diese stirnseitige Außenfläche durch jeweils ein wärmeleitfähiges Element 6 gebildet. Es ist jedoch auch denkbar, dass die Gewindemuttern unmittelbar auf den Speicherzellen 6 selbst anliegen.

Figur 6 zeigt eine perspektivische Teilansicht einer Energiespeichervorrichtung 1" gemäß einer weiteren Ausführungsform der Erfindung.

Auch diese Ausführungsform weist alle Merkmale der Ausführungsform der Figur 1 auf. Im Unterschied zur Ausführungsform der Figur 1 sind in den zwischen zwei benachbarten Speicherzellen 3 ausgebildeten Zwischenbereichen jedoch zwei wärmeleitfähige Elemente 16 angeordnet. Diese sind in unterschiedlichen Hälften des Zwischenbereichs angeordnet, wobei das eine der zwei wärmeleitfähigen Elemente 16 an der einen Kühlmittelleitung 5 und das andere der zwei wärmeleitfähigen Elemente 16 an der anderen Kühlmittelleitung 5 thermisch kontaktiert ist. Ein weiterer Unterschied liegt darin, dass die als Wärmeleitblech ausgebildeten wärmeleitfähigen Elemente 16 plan und in einem im Zwischenbereich angeordneten Abschnitt klammerförmig ausgebildet sind. Wie in Figur 6 ersichtlich wird, liegen die klammerförmig ausgebildeten wärmeleitfähigen Elemente 16 damit nur in einem Randbereich der Speicherzellen 3 flächig an.

Ein weiterer Unterschied zu den bisher beschriebenen Ausführungsformen liegt in der thermischen Kontaktierung zu den Kühlmittelleitungen 5. Im Unterschied zur Figur 1 sind die wärmeleitfähigen Elemente 16 zur thermischen Kontaktierung nicht an die Kühlmittelleitungen 5 gelötet, sondern um den als Spannelement 8 ausgebildeten Abschnitt der Kühlmittelleitung 5 gebogen. Der umgebogene Abschnitt der wärmeleitfähigen Elemente 16 liegt flächig an dem das Spannelement 8 ausbildenden Abschnitt der Kühlmittelleitung 5 an. Aus Figur 6 wird ersichtlich, dass das umgebogene wärmeleitfähige Element 16 den als Spannelement 8 ausgebildeten Abschnitt der Kühlmittelleitung 5 formkorrespondierend bzw. mantelartig umfasst bzw. umhüllt.

In weiteren, hier nicht dargestellten, Ausführungsformen ist es ferner denkbar, dass das wärmeleitfähige Element 6; 16 zur thermischen Kontaktierung an die Kühlmittelleitung 5 an den das Spannelement 8 ausbildenden Abschnitt der Kühlmittelleitung 5 geklemmt ist.

Obwohl die Erfindung unter Bezugnahme auf bestimmte Ausführungsbeispiele beschrieben worden ist, ist es für den Fachmann ersichtlich, dass verschiedene Änderungen ausgeführt werden können und Äquivalente als Ersatz verwendet werden können, ohne den Bereich der Erfindung zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen. Insbesondere beansprucht die Erfindung auch Schutz für den Gegenstand und die Merkmale der Unteransprüche unabhängig von den in Bezug genommenen Ansprüchen.

### Bezugszeichenliste

- 1, 1', 1": Energiespeichervorrichtung
- 2: Batteriezellenstapel
- 3: Speicherzellen
- 4: Kühlvorrichtung
- 5: Kühlmittelleitung
- 6;16: wärmeleitfähiges Element
- 7: Spannvorrichtung
- 8: Spannelement
- 9: Gewindemutter
- 10: Verstärkungsblech
- 11: aus dem Zwischenbereich herausragender Abschnitt
- 12: Ausnehmung
- 14: Anschlussflansch
- 15: elektrische Anschlüsse

## Patentansprüche

1. Energiespeichervorrichtung (1; 1'; 1") zur Speicherung elektrischer Energie, vorzugsweise für ein zumindest teilweise elektrisch angetriebenes Fahrzeug, umfassend
a) einen Batteriezellenstapel (2) aus einer Mehrzahl von stapelartig nebeneinander angeordneten Speicherzellen (3);
b) eine Kühlvorrichtung (4) zur Kühlung der Speicherzellen (3), aufweisend mindestens eine mit einem Kühlmittel, vorzugsweise in Stapelrichtung (S), durchströmbare Kühlmittelleitung (5), die sich entlang einer Außenwand des Batteriezellenstapels (2) erstreckt, und mindestens ein wärmeleitfähiges Element (6; 16), das in einem der zwischen zwei benachbarten Speicherzellen (3) ausgebildeten Zwischenbereiche angeordnet ist, das sich aus dem Zwischenbereich heraus bis zu der Kühlmittelleitung (5) erstreckt und an die Kühlmittelleitung (5) thermisch kontaktiert ist;
c) eine Spannvorrichtung (7) zum Verspannen der Speicherzellen (3), aufweisend mindestens ein sich entlang der Außenwand des Batteriezellenstapels (2) erstreckendes Spannelement (8),
d) wobei ein Abschnitt der Kühlmittelleitung (5) das Spannelement (8) ausbildet.

2. Energiespeichervorrichtung (1; 1'; 1") nach Anspruch 1, wobei die Spannvorrichtung (7) zumindest eine mit einem Außengewinde des Spannelements (8) kämmende Gewindemutter (9) aufweist, mittels derer eine Spannkraft in Stapelrichtung (S) erzeugbar ist.

3. Energiespeichervorrichtung (1; 1'; 1") nach Anspruch 2,
a) wobei die Gewindemutter (9) an einer, in Stapelrichtung (S) gesehen, stirnseitigen Außenfläche des Batteriezellenstapels (2) anliegt; oder
b) wobei die Spannvorrichtung (7) zwei Gewindemuttern (9) und zwei an in Stapelrichtung (S) gegenüberliegenden Stirnseiten des Batteriezellenstapels (2) angeordnete Verstärkungsbleche (10) aufweist, die jeweils zwischen der Stirnseite und einer der Gewindemuttern (9) angeordnet sind.

4. Energiespeichervorrichtung (1; 1'; 1") nach einem der vorherigen Ansprüche, wobei ein aus dem Zwischenbereich herausragender Abschnitt (11) des wärmeleitfähigen Elements (6) mindestens eine Ausnehmung (12) , vorzugsweise eine Bohrung, aufweist, durch die sich der das Spannelement (8) ausbildende Abschnitt der Kühlmittelleitung (5) erstreckt.

5. Energiespeichervorrichtung (1; 1'; 1") nach einem der vorherigen Ansprüche, wobei das wärmeleitfähige Element (6; 16) zur thermischen Kontaktierung an die Kühlmittelleitung (5)
a) an den das Spannelement (8) ausbildenden Abschnitt der Kühlmittelleitung (5) gelötet und/oder geklemmt ist, und/oder
b) um den als Spannelement (8) ausgebildeten Abschnitt der Kühlmittelleitung (5) gebogen ist, vorzugsweise dergestalt, dass das wärmeleitfähige Element (6) abschnittsweise flächig an dem das Spannelement (8) ausbildenden Abschnitt der Kühlmittelleitung (5) anliegt.

6. Energiespeichervorrichtung (1; 1'; 1") nach einem der vorhergehenden Ansprüche, wobei das wärmeleitfähige Element (6; 16) ein Wärmeleitblech ist, beispielsweise ein Aluminium-Blech.

7. Energiespeichervorrichtung (1; 1'; 1") nach einem der vorhergehenden Ansprüche, wobei das wärmeleitfähige Element (6) zumindest abschnittsweise wellenförmig geformt ausgebildet ist, vorzugsweise in einem im Zwischenbereich liegenden Abschnitt des wärmeleitfähigen Elements (6), wellenförmig ausgebildet ist.

8. Energiespeichervorrichtung (1") nach einem der vorherigen Ansprüche, wobei das Wärmeleitblech plan und in einem im Zwischenbereich angeordneten Abschnitt klammerförmig und/oder C-förmig und/oder hufeisenförmig ausgebildet ist.

9. Energiespeichervorrichtung (1; 1'; 1") nach einem der vorhergehenden Ansprüche, wobei auf zwei gegenüberliegenden Seiten des Batteriezellenstapels (2) jeweils eine Kühlmittelleitung (5) und ein Spannelement (8) angeordnet sind, wobei ein Abschnitt der Kühlmittelleitungen (5) das entsprechende Spannelement (8) ausbildet.

10. Energiespeichervorrichtung (1") nach Anspruch 9, wobei in mindestens einem der zwischen zwei benachbarten Speicherzellen (3) ausgebildeten Zwischenbereiche zwei wärmeleitfähige Elemente (16) angeordnet sind, die vorzugsweise in unterschiedlichen Hälften des Zwischenbereichs angeordnet sind, wobei das eine der zwei wärmeleitfähigen Elemente (16) an der einen Kühlmittelleitung (5) und das andere der zwei wärmeleitfähigen Elemente (16) an der anderen Kühlmittelleitung (5) thermisch kontaktiert ist.

11. Energiespeichervorrichtung (1; 1'; 1") nach einem der vorhergehenden Ansprüche, wobei die Kühlvorrichtung (4) mehrere wärmeleitfähige Elemente (6; 16) aufweist, wobei zwischen allen Speicherzellen (3) jeweils mindestens ein wärmeleitfähiges Element (6; 16) angeordnet ist.

12. Energiespeichervorrichtung (1; 1'; 1") nach einem der vorhergehenden Ansprüche, wobei sich die Spannvorrichtung (7) in Stapelrichtung (S) zumindest von der ersten Speicherzelle (3) bis zur letzten Speicherzelle (3) des Batteriezellenstapels erstreckt.

13. Energiespeichervorrichtung (1; 1'; 1") nach einem der vorhergehenden Ansprüche, wobei der das Spannelement (8) ausbildende Abschnitt der Kühlmittelleitung (5) als Rohr ausgeführt ist, das vorzugsweise an einem in Stapelrichtung (S) überstehendenden Endbereich einen Anschlussflansch (14) aufweist.

14. Energiespeichervorrichtung (1; 1'; 1") nach einem der vorhergehenden Ansprüche, wobei die Speicherzellen (3) des Batteriezellenstapels (2) lediglich durch Verspannen mittels der Spannvorrichtung (7) zueinander in Position gehalten sind und vorzugsweise kein zusätzlicher Halterahmen zur Halterung der Speicherzellen (3) vorgesehen ist.

15. Fahrzeug, vorzugsweise Nutzfahrzeug, aufweisend die Energiespeichervorrichtung (1; 1'; 1") nach einem der vorhergehenden Ansprüche.
